# EUROPEAN PATENT SPECIFICATION

(11) **EP 1 301 388 B1**
(45) Date of publication and mention of the grant of the patent: **03.12.2003**
(21) Application number: 01978243.2
(22) Date of filing: 04.07.2001
(51) Int. Cl.: B62D 29/00, B62D 23/00

(54) **AN INTERCONNECTION UNIT FOR STRUCTURAL ELEMENTS**
VERBINDUNGSEINHEIT FÜR STRUKTURELEMENTE
UNITE D'INTERCONNEXION POUR ELEMENTS STRUCTURELS

(30) Priority: 07.07.2000 IT TO000684
(43) Date of publication of application: 16.04.2003
(73) Proprietor: C.R.F. Società Consortile per Azioni, 10043 Orbassano (Torino) (IT)
(72) Inventor: CORRIAS, Silvio, I-10137 Torino (IT); BOERO, Giorgio, I-14100 Asti (IT); FALAGARIO, Angela, I-10143 Torino (IT)
(74) Representative: Quinterno, Giuseppe
(86) International application number: EP0107659
(87) International publication number: WO02004276

(56) References cited:
- EP-A- 0 994 005
- DE-A- 19 508 970
- US-A- 5 226 696
- US-A- 5 741 026

## Description

The present invention relates to a connector for structural elements, for use in assembling structures with a high performance/weight ratio, such as motor vehicle bodies.

One object of the invention is to provide an interconnection unit which is both simple and economical to manufacture and which offers high structural strength. Such an interconnection unit, according to the preamble of claim 1, is discloses in document US, A, 5 741 026.

This and other objects are achieved according to the invention by providing an interconnection unit the main characteristics of which are defined in the appended Claim 1.

Other characteristics and advantages of the invention will become apparent from the detailed description which follows, provided purely by way of non-limitative example, with reference to the appended drawings, in which
Figures 1 and 2 are perspective views of an interconnection unit of the invention;
Figure 3 is a perspective view of an interconnection unit of the invention during one stage of its manufacture;
Figure 4 is a partial perspective view of a detail of Figure 3;
Figure 5 is a cross section taken on the line V-V of Figure 1, and
Figure 6 is a section taken on the line VI-VI of Figure 1.

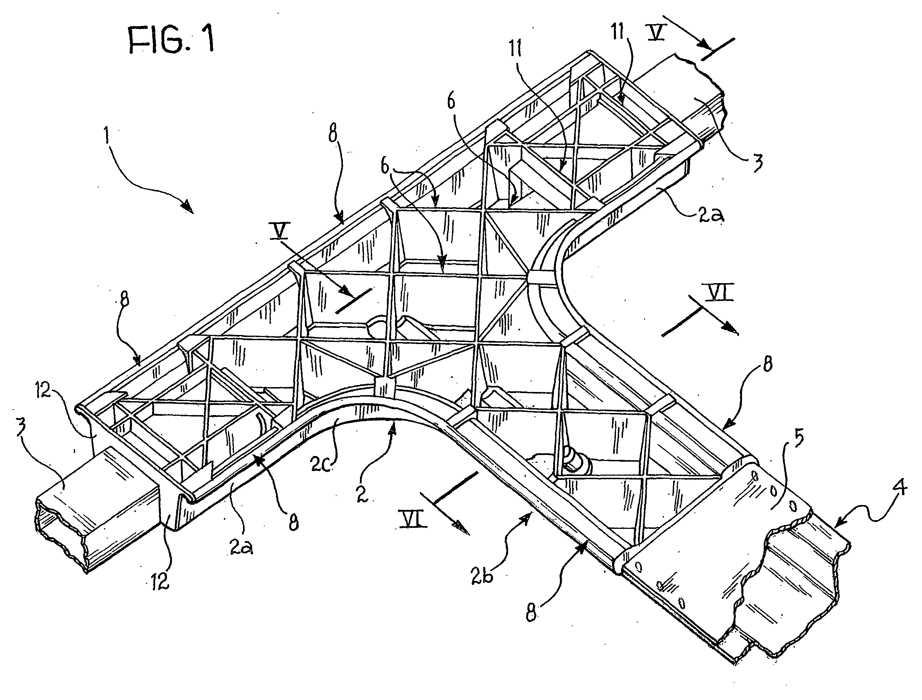

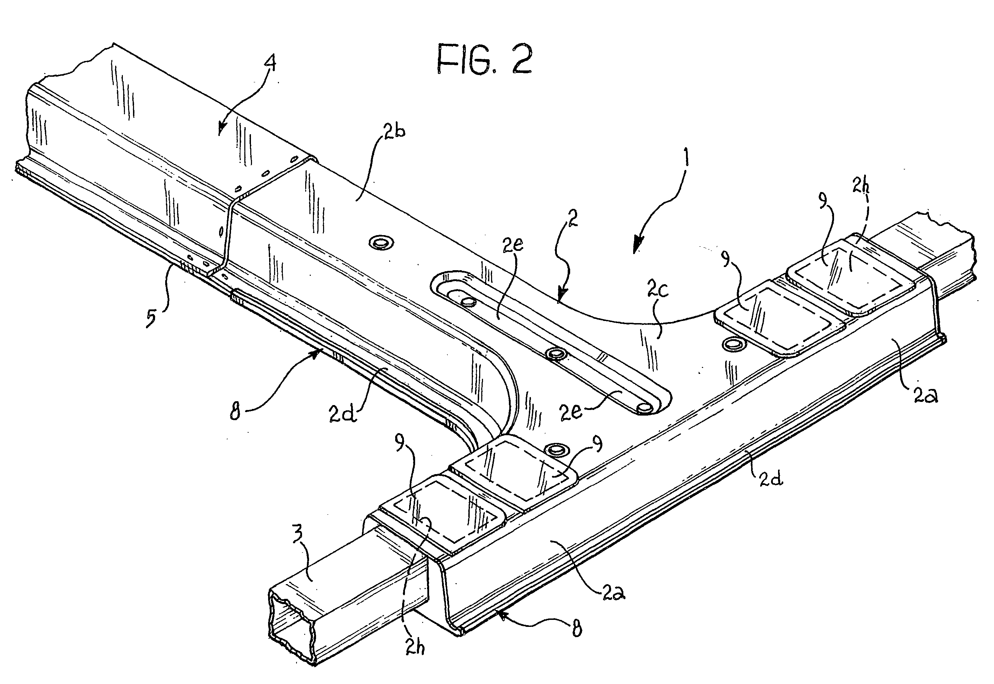

In Figures 1 and 2, an interconnection unit of the invention is generally indicated 1.

In the embodiment shown by way of example, the interconnection unit 1 includes an essentially T-shaped metal junction element 2, with two essentially aligned arms 2a and one arm 2b which extends from an intermediate portion 2c (see figure 2 in particular).

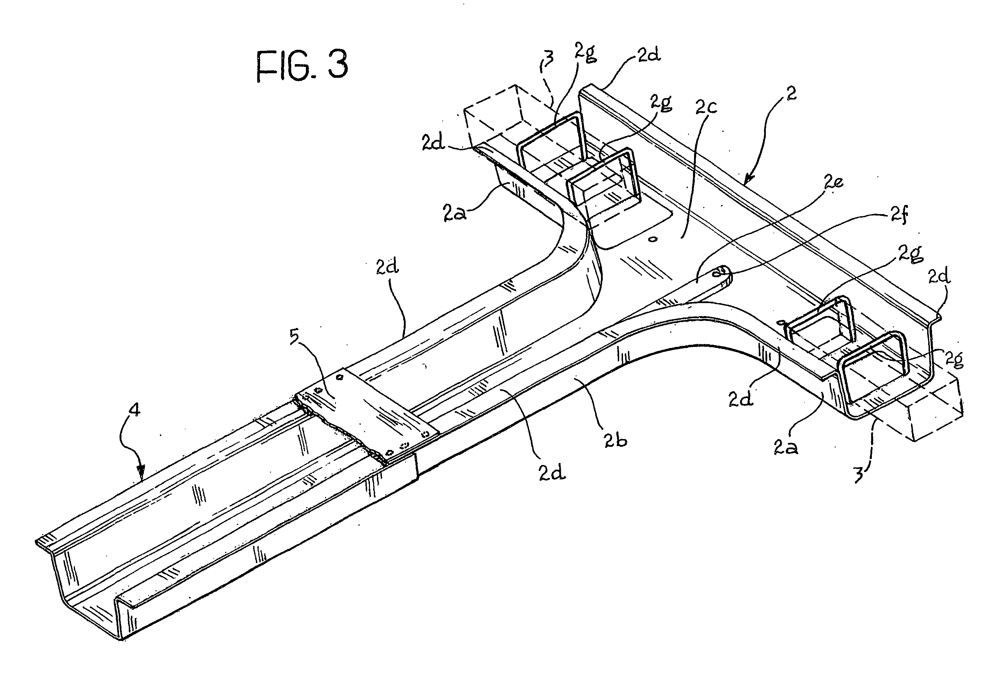

The arms 2a and arm 2b of the metal junction element 2 are essentially channel-shaped. The top edges of the sides of these arms of the junction element 2 form respective outwardly facing flanges, indicated 2d in Figures 3, 4 and 6. In the intermediate portion 2c, an indentation 2e is formed in the bottom surface of the junction element 2, preferably so as to project inwardly of the channel-shaped section, as can be seen from Figures 2, 3 and 6.

The indentation 2e is elongate and extends at least in part into the arm 2b of the junction element 2. For reasons which will be explained later, a plurality of openings 2f are conveniently formed in the top surface of the indentation 2e (see Figures 3, 5 and 6).

The junction element 2 is preferably made of steel, or aluminium or an alloy thereof, or magnesium or an alloy thereof. The junction element 2 may be shaped by any known method, for example by bending, rolling or hydro-forming sheet metal, or by drawing or casting in a mould.

The junction element 2 can conveniently be made in one piece, being either of substantially uniform or varying thickness. In this second case, the junction element 2 can be made from multi-layered sheet metal and/or from compound materials, bonded together by the so-called tailored blank method. Alternatively, the junction element 2 can be assembled from several components, possibly constituted by different materials and of varying thicknesses, each component being manufactured by a moulding method known per se and then assembled with the others using connectors manufactured by known methods.

With reference once again to Figures 1 and 2, the end portions of two connector elements 3, intended to be connected (in a way which is not shown) to other structural elements such as girders, tie rods, rafters or the like in order to form complex structures, are positioned and secured to the arms 2a of the junction element 2.

In the embodiment illustrated by way of example, these connector elements form a closed section. However such connector elements could have an open section.

Like the junction element 2, the connector elements 3 are conveniently made of metal: steel, aluminium or an alloy. thereof, or magnesium or an alloy thereof, for example.

Depending on either opportunity or requirements, the connector elements 3 can be made of a different material to that of the junction element 2.

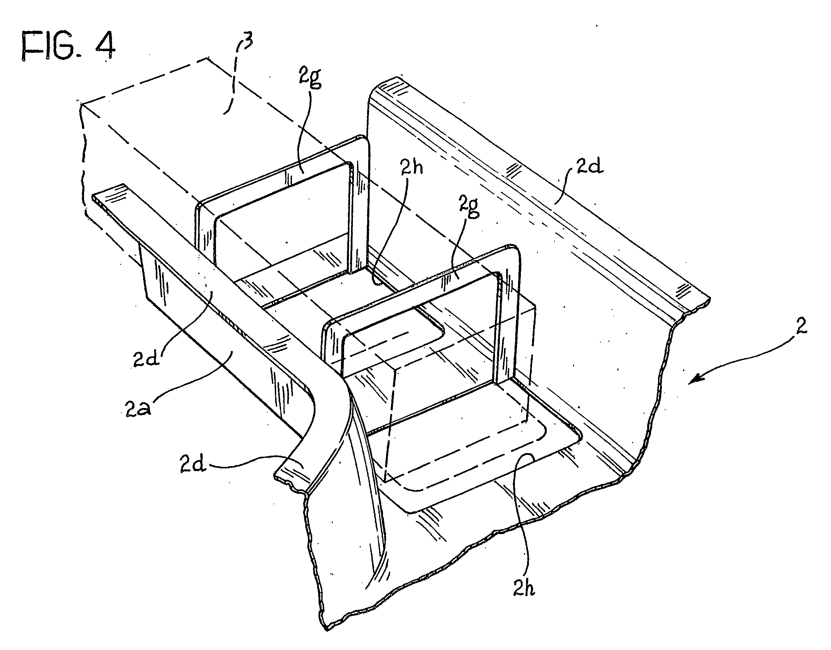

With reference in particular to Figures 3 and 4, a pair of essentially C-shape brackets 2g extend from the bottom surface of the arms 2a of the junction element 2. For convenience, these brackets are made in one piece with the junction element 2 by means of operations involving cutting and folding upwards.

The brackets 2g of the arm 2a of the junction element 2 are of a size which enables the end portions of the connector elements 3 to be inserted therein, as shown in Figures 3 and 4 in particular.

In the embodiment illustrated by way of example, a structural element 4, made of the same material as the junction element 2, is secured to the arm 2b of the junction element 2. The structural element 4 is also channel-shaped in cross section.

The arm 2b of the junction element 2 may be thicker so that, thus reinforced, it ensures that stress is transferred gradually to and from the structural element 4. Alternatively, as shown in Figures 2 and 3, the end portions of the arm 2b of the junction element 2 and of the structural element 4 respectively are superimposed and fixed mechanically, by spot welding for example. A plate, such as that indicated 5 in Figures 1, 2 and 3 could also be fixed to the structural element 4, by welding for example.

During assembly, the connector elements 3 positioned in the brackets 2g of the junction element 2 can be made more secure by welding or adhesive.

The interconnection unit 1 also includes a reinforcing grid structure, indicated 6 in Figure 1. This structure is made of a plastics material, a thermoplastics material for preference, which is injection-moulded into the metal junction element 2 after the connector elements 3 have been positioned and the additional structural element 4 has been attached.

The reinforcing grid structure 6 is securely fixed both to the metal junction element 2 and to the connector elements 3. In the embodiment shown, it includes a plurality of more or less orthogonally intersecting walls, fixed to the sides and to the bottom of the arms 2a, 2b of the junction element 2.

The cross section of the base of the ribs or walls of the grid structure 6 can be enlarged to form a square, a rectangle, a triangle, a trapezoid, a semicircle or the like, of suitable dimensions so as to form a preferential flow path for the plastics material during moulding.

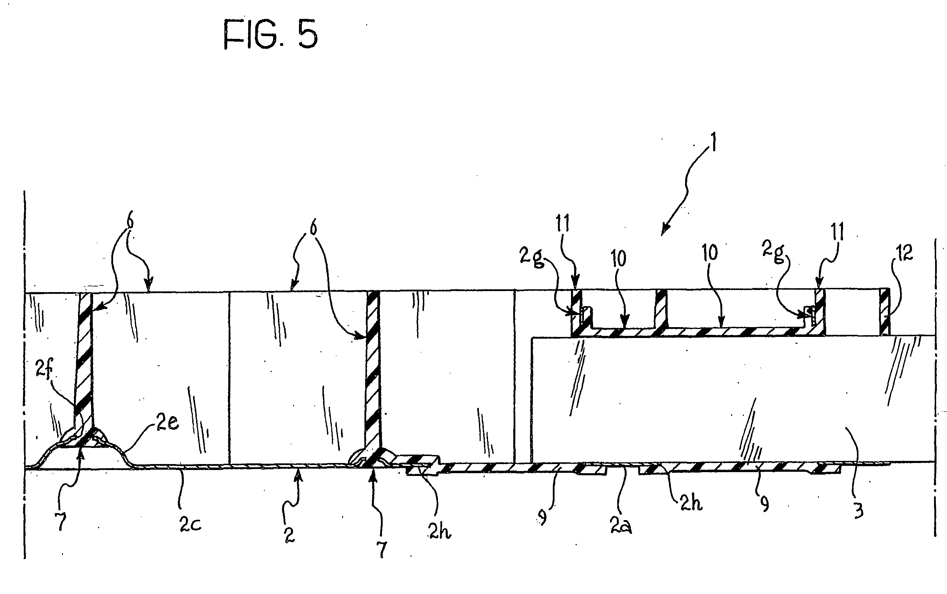

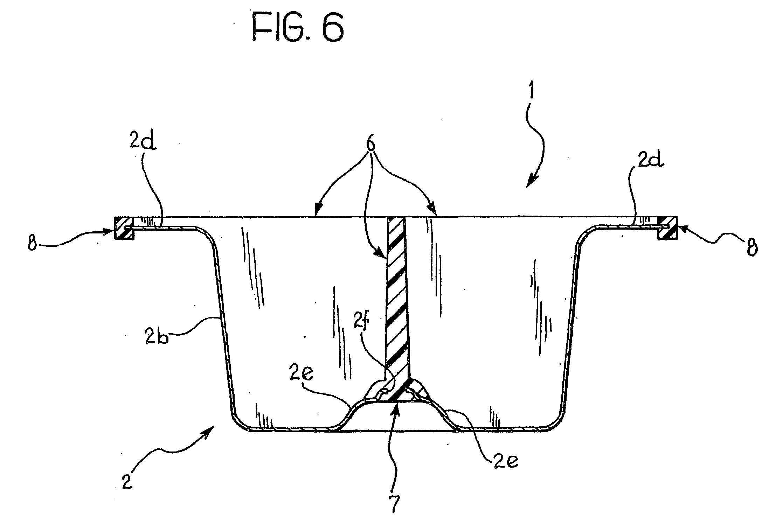

Many methods can be used to secure the grid structure 6 to the junction element 2. In the example illustrated, (see Figures 5 and 6 in particular) it is secured to the base wall of the junction element 2 at the site of holes, such as those 2f formed through the indentation 2e. During moulding an enlarged formation 7 is formed either side of the hole, at the base of one of the walls or partitions forming the grid structure, or at an intersection thereof.

The joins or fixings between the grid structure 6 and the junction element 2 can be of various shapes: a circle for example, or an ellipse or a symmetrical or asymmetrical cruciform shape.

At the sides of the arms 2a, 2b of the junction element 2, the grid structure 6 is fixed, for example, as shown in figure 6. In this arrangement, a bead 8 is formed during moulding along the edges of the flange 2d of these sides (see Figure 2).

During the moulding of the reinforcing grid structure 6, the connector elements 3 are partially surrounded and secured by formations of moulded plastics material which insinuate themselves into the apertures 2h (see Figure 4) in the bottom wall of the arms 2a of the junction element 2 by the formation of the brackets 2g. These formations of plastics material are indicated 9 in Figures 2 and 5.

The end portions of the connector elements 3 of the junction element 2 are fixed at the top by a further flat formation of plastics material, such as that indicated 10 in Figure 5. This formation is formed in one piece with transverse ribs 11 which can advantageously envelop the brackets 2g. It is particularly advantageous to envelop the brackets when the connector elements 3 are made of a different material from that of the junction element 2, since by preventing contact by these different materials it is possible to prevent galvanization from causing them to corrode.

Referring to Figure 1, end closure walls 12 can be formed in one piece with the grid structure 6 across the end portions of the arms 2a of the junction element 2, so as to sealably surround the connector elements 3.

The grid structure can be more securely fixed to the connector elements 3 by arrangements similar to those described with regard to securing the said reticular structure to the junction element 2.

It is convenient, though not necessary, for the grid structure 6 to have weakened portions which can serve as collapse initiators, for example in the event of a crash of the structure of which the connector forms part. These weakened portions can consist of localized areas where the walls or partitions forming the grid structure are thinner in cross section, or in portions with an exaggerated curvature, operable to serve as flexing initiators.

Naturally; the principle of the invention remaining unchanged, embodiments and manufacturing details may vary widely from those described and illustrated purely by way of non-limitative example, without departing thereby from the scope of the invention, as claimed in the appended Claims.

So, for example, the metal junction element 2 could be pre-cut and then positioned in a mould operable to give the pre-cut element the desired shape, with the plastics material for forming the grid structure, and any other structures described above, then being injection moulded.

## Claims

1. An interconnection unit (1) for connecting structural elements, **characterised in that** it includes
a metal junction element (2) with at least one channel-shape arm (2a), and having the end portion of at least one connector element (3) for connection to a further structures element arranged therein; and
a reinforcing grid structure (6), made of a plastics material injection-moulded into the metal junction element (2) after the at least one connector element (3) has been positioned, said grid structure (6) being secured both to the metal junction element (2) and to the said at least one connector element (3).

2. An interconnection unit according to Claim 1, in which the metal junction element (2) is made of a material chosen from steel, or aluminium or an alloy thereof or magnesium or an alloy thereof.

3. An interconnection unit according to Claims 1 or 2, in which the metal junction element (2) is formed in one piece.

4. An interconnection unit according to Claims 1 or 2, in which the metal junction element (2) is made of composite layers, using sheet metal welded or otherwise bonded together.

5. An interconnection unit according to any preceding Claim, in which at least one bracket (2g) extends from a surface of at least one said arm (2a) of the junction element (2) for enclosing the end portion of a said at least one connector element (3).

6. An interconnection unit according to Claim 5, in which the said at least one bracket (2g) is formed in one piece with the junction element (2) by bending and cutting operations.

7. An interconnection unit according to Claims 5 or 6, in which the said at least one bracket (2g) extends from the base of one arm (2a) of the junction element (2).

8. An interconnection unit according to any preceding Claim, in which the said at least one connector element (3) is made of a metal.

9. An interconnection unit according to Claim 8, in which the said at least one connector element (3) is made of a material chosen from steel, or aluminium or an alloy thereof, or magnesium or an alloy thereof.

10. An interconnection unit according to any preceding Claim, in which the said at least one connector element (3) is made of a different metal from that of the junction element (2), with separating formations made of the said plastics material (11) interposed between them.

11. An interconnection unit according to Claims 5 and 10, **characterised in that** the said at least one bracket (2g) is covered by the plastics material forming the said grid structure (6).

12. An interconnection unit according to any preceding Claim, in which means for securing the aforesaid reinforcing grid structure (6), such as grooves and holes, are formed in the junction element (2) and in the said at least one connector element (3).

13. An interconnection unit according to Claim 12, in which the grid structure (6) is secured to the junction element and to the said at least one connector element (3) by means of enlarged formations (7) of plastics material, fixed to the said securing means (2f).

14. An interconnection unit according to any preceding Claim, in which the junction element (2) has at least one further channel-shape arm (2b) for connecting a structural element (4), made of the same metal as the junction element (2).

15. An interconnection unit according to Claim 14, in which the said grid structure (6) extends at least in part also into the said further arm (2b) of the junction element (2).

16. An interconnection unit according to any preceding Claim, in which the said grid structure (6) has weakened portions in certain predetermined areas operable to act as collapse initiators.

17. An interconnection unit according to Claim 16, in which at least one weakened portion is thinner in cross section.

18. An interconnection unit according to Claims 16 or 17, in which at least one weakened portion is locally curved by more than a predetermined value.

19. An interconnection unit according to any preceding Claim, **characterised in that** the grid structure (6) includes a plurality of ribs or walls with an enlarged cross section, of any shape, at the base.

20. An interconnection unit according to Claim 19, in which the grid structure (6) has means for securing it to the junction element (2) of a predetermined shape, that is circular, elliptic, slot-like, or in the form of a symmetric or asymmetric cross.

21. An interconnection unit according to any preceding Claim, in which end closure walls (12) are formed in one piece with the grid structure (6), which extend across the end portion of the aforesaid arms (2a) of the junction element (2) and sealably surround the connector elements (3).

22. An interconnection unit according to any preceding Claim, in which at least one indentation (2e) is formed in the base of the junction element (2), in the portion of this latter between its arms (2a, 2b), preferably so as to project inwardly of the channel shape section of the said junction element (2).

23. An interconnection unit according to Claim 22, in which at least one hole (2f) is formed through the said indentation (2e) for locally securing the said reinforcing grid structure (6).

24. An interconnection unit according to any preceding Claim, in which the said metal junction element (2) is made as a pre-cut element, which is shaped in a mould in which the grid structure is also to be injection-moulded.

## Patentansprüche

1. Verbindungseinheit (1 ) zum Verbinden von Bauelementen, **dadurch gekennzeichnet, dass** sie
ein Verbindungselement (2) aus Metall mit zumindest einem kanalförmigen Arm (2a) und mit einem Endabschnitt von zumindest einem darin angeordneten Verbinderelement (3) zum Verbinden mit einem weiteren Bauelement; und
eine verstärkende Gitterstruktur (6), bestehend aus Kunststoffmaterial, welches in das Verbindungselement (2) aus Metall gespritzt wird, nachdem das zumindest eine Verbinderelement (3) positioniert wurde, wobei die Gitterstruktur (6) sowohl am Verbindungselement (2) aus Metall als auch am zumindest einen Verbinderelement (3) befestigt ist,
umfasst.

2. Verbindungseinheit nach Anspruch 1, wobei das Verbindungselement (2) aus Metall aus einem Material besteht, das aus Stahl oder Aluminium oder einer Legierung davon oder aus Magnesium oder einer Legierung davon ausgewählt wurde.

3. Verbindungseinheit nach den Ansprüchen 1 oder 2, wobei das Verbindungselement (2) aus Metall einstückig geformt ist.

4. Verbindungseinheit nach den Ansprüchen 1 oder 2, wobei das Verbindungselement (2) aus Metall aus Verbundschichten unter Verwendung von Metallblech, das verschweißt oder anderweitig verbunden ist, besteht.

5. Verbindungseinheit nach jedem vorherigen Anspruch, wobei zumindest eine Klammer (2g) von einer Fläche von zumindest einem Arm (2a) des Verbindungselementes (2) zum Umschließen des Endabschnittes von zumindest einem Verbinderelement (3) absteht.

6. Verbindungseinheit nach Anspruch 5, wobei zumindest eine Klammer (2g) einstückig mit dem Verbindungselement (2) durch Biege- und Schneideverfahren geformt ist.

7. Verbindungseinheit nach den Ansprüchen 5 oder 6, wobei zumindest eine Klammer (2g) von der Grundfläche eines Armes (2a) des Verbindungselements (2) absteht.

8. Verbindungseinheit nach jedem vorherigen Anspruch, wobei zumindest ein Verbinderelement (3) aus Metall besteht.

9. Verbindungseinheit nach Anspruch 8, wobei zumindest ein Verbinderelement (3) aus einem Material besteht, das aus Stahl oder Aluminium oder einer Legierung davon oder aus Magnesium oder einer Legierung davon ausgewählt wurde.

10. Verbindungseinheit nach jedem vorherigen Anspruch, wobei zumindest ein Verbinderelement (3) aus einem anderen Metall besteht als jenes des Verbindungselements (2), mit Trennformationen, die aus Kunststoffmaterial (11) bestehen, das zwischen ihnen eingefügt wurde.

11. Verbindungseinheit nach den Ansprüchen 5 und 10, **dadurch gekennzeichnet, dass** zumindest eine Klammer (2g) mit Kunststoffmaterial bedeckt ist, welches die Gitterstruktur (6) bildet.

12. Verbindungseinheit nach jedem vorherigen Anspruch, wobei Mittel zum Befestigen der oben erwähnten verstärkenden Gitterstruktur (6), wie Nuten und Öffnungen, im Verbindungselement (2) und in zumindest einem Verbinderelement (3) ausgebildet sind.

13. Verbindungseinheit nach Anspruch 12, wobei die Gitterstruktur (6) am Verbindungselement und am zumindest einen Verbinderelement (3) mittels vergrößerter Formationen (7) aus Kunststoffmaterial, die bei den Sicherungsmitteln (2f) fixiert sind, befestigt ist.

14. Verbindungseinheit nach jedem vorherigen Anspruch, wobei das Verbindungselement (2) zumindest einen weiteren kanalförmigen Arm (2b) zum Verbinden eines Bauelements (4) aufweist, das aus dem selben Metall wie das Verbindungselement (2) besteht.

15. Verbindungseinheit nach Anspruch 14, wobei die Gitterstruktur (6) zumindest teilweise auch in den weiteren Arm (2b) des Verbindungselementes (2) hineinreicht.

16. Verbindungsbauteil nach jedem vorherigen Anspruch, wobei die Gitterstruktur (6) geschwächte Abschnitte in bestimmten vorgegebenen Bereichen mit der Funktion als Sollbruchstellen aufweist.

17. Verbindungseinheit nach Anspruch 16, wobei zumindest ein geschwächter Abschnitt im Querschnitt dünner ist.

18. Verbindungseinheit nach den Ansprüchen 16 oder 17, wobei zumindest ein geschwächter Abschnitt lokal stärker gekrümmt ist als ein vorgegebener Wert.

19. Verbindungseinheit nach jedem vorherigen Anspruch, **dadurch gekennzeichnet, dass** die Gitterstruktur (6) eine Vielzahl an Rippen oder Wänden mit einem vergrößerten Querschnitt jeglicher Ausgestaltung auf der Grundfläche umfasst.

20. Verbindungseinheit nach Anspruch 19, wobei die Gitterstruktur (6) Mittel zu deren Befestigung am Verbindungselement (2) einer vorgegebenen Form aufweist, die rund, elliptisch, nutartig ist oder die Form eines symmetrischen oder asymmetrischen Kreuzes hat.

21. Verbindungseinheit nach jedem vorherigen Anspruch, wobei Stirnwände (12) einstückig mit der Gitterstruktur (6) geformt sind, die sich quer durch den Endabschnitt der oben erwähnten Arme (2a) des Verbindungselements (2) erstreckt und dichtend die Verbindereiemente (3) umschließt.

22. Verbindungseinheit nach jedem vorherigen Anspruch, wobei zumindest eine Vertiefung (2e) in der Grundfläche des Verbindungselements (2) ausgebildet ist, im Abschnitt des Letzteren zwischen dessen Armen (2a, 2b), vorzugsweise so, dass sie nach innen des kanalförmigen Abschnittes des Verbindungselements (2) hervorsteht.

23. Verbindungseinheit nach Anspruch 22, wobei zumindest eine Öffnung (2f) durch die Vertiefung (2e) zum lokalen Befestigen der verstärkenden Gitterstruktur (6) geformt ist.

24. Verbindungseinheit nach jedem vorherigen Anspruch, wobei das Verbindungselement (2) aus Metall als ein vorgestanztes Element gefertigt ist, das in einer Form geformt wird, in der auch die Gitterstruktur spritzgeformt wird.

## Revendications

1. Unité d'interconnexion (1) pour connecter des éléments structurels **caractérisée en ce qu'**elle comprend
un élément de jonction métallique (2) avec au moins un bras en forme de canal (2a) et présentant la partie d'extrémité d'au moins l'élément de l'unité de connexion (3) pour une connexion à un autre élément structurel agencé à l'intérieur ; et
une structure de grille de renforcement (6) composée de matériau plastique et moulée par injection dans l'élément de jonction métallique (2) après que le au moins élément de l'unité de connexion (3) a été positionné, ladite structure de grille (6) étant fixée à la fois à l'élément de jonction métallique (2) et au dit au moins élément de l'unité de connexion (3).

2. Unité d'interconnexion selon la revendication 1, dans laquelle l'élément de jonction métallique (2) est composé d'un matériau choisi à partir d'acier ou d'aluminium ou d'alliages de celui-ci ou de magnésium ou d'alliages de celui-ci.

3. Unité d'interconnexion selon les revendications 1 ou 2, dans laquelle l'élément de jonction métallique (2) est formé en une seule pièce.

4. Unité d'interconnexion selon les revendications 1 ou 2, dans laquelle l'élément de jonction métallique (2) et composé de couches composites utilisant une tôle de métal soudées ou autrement collées ensemble.

5. Unité d'interconnexion selon l'une quelconque des revendications précédentes, dans laquelle au moins un support (2g) s'étend depuis une surface d'au moins un desdits bras (2a) de l'élément de jonction (2) pour refermer la partie d'extrémité dudit au moins élément de l'unité de connexion (3).

6. Unité d'interconnexion selon la revendication 5, dans laquelle ledit au moins un support (2g) est formé en une seule pièce avec l'élément de jonction (2) par opérations de pliage et de coupage.

7. Unité d'interconnexion selon la revendication 5 ou 6, dans laquelle au moins un support (2g) s'étend depuis le socle d'un bras (2a) de l'élément de jonction (2).

8. Unité d'interconnexion selon l'une quelconque des revendications précédentes, dans laquelle ledit au moins élément de l'unité de connexion (3) est composé de métal.

9. Unité d'interconnexion selon la revendication 8, dans laquelle ledit au moins élément de l'unité de connexion (3) est composé d'un matériau choisi à partir d'acier ou d'aluminium ou d'alliages de celui-ci, ou de magnésium ou d'alliages de celui-ci.

10. Unité d'interconnexion selon l'une quelconque des revendications précédentes, dans laquelle ledit au moins élément de l'unité de connexion (3) est composé d'un matériau différent de celui de l'élément de jonction (2) avec des formations composées à partir dudit matériau plastique (11) interposées entre elles.

11. Unité d'interconnexion selon les revendications 5 et 10, **caractérisé en ce que** ledit au moins support (2g) est couvert par le matériau plastique formant ladite structure de grille (6).

12. Unité d'interconnexion selon l'une quelconque des revendications précédentes, dans laquelle des moyens pour fixer la structure de grille de renforcement mentionnée ci-dessus (6) tels que des rainures et des trous sont formés dans l'élément de jonction (2) et dans ledit au moins élément de l'unité de connexion (3).

13. Unité d'interconnexion selon la revendication 12, dans laquelle la structure de grille (6) est fixée à l'élément de jonction et au dit au moins élément de l'unité de connexion (3) au moyen de formations élargies (7) de matériau plastique fixées au dit moyen de fixation (2f).

14. Unité d'interconnexion selon l'une quelconque des revendications précédentes, dans laquelle l'élément de jonction (2) présente au moins un autre bras en forme de canal (2b) pour relier un élément structurel (4) composé du même métal que l'élément de jonction (2).

15. Unité d'interconnexion selon la revendication 14, dans laquelle ladite structure de grille (6) s'étend au moins en partie également à l'intérieur dudit autre bras (2b) de l'élément de jonction (2).

16. Unité d'interconnexion selon l'une quelconque des revendications précédentes, dans laquelle ladite structure de grille (6) présente des parties affaiblies. dans certaines zones prédéterminées pouvant fonctionner pour agir en tant qu'initiateurs d'effondrement.

17. Unité d'interconnexion selon la revendication 16, dans laquelle au moins une partie affaiblie est plus mince en coupe transversale.

18. Unité d'interconnexion selon les revendications 16 ou 17, dans lesquelles au moins une partie affaiblie est incurvée localement de plus d'une valeur prédéterminée.

19. Unité d'interconnexion selon l'une quelconque des revendications précédentes, **caractérisée en ce que** la structure de grille (6) comprend une pluralité de nervures ou de parois avec une coupe transversale élargie, de toute forme, au niveau du socle.

20. Unité d'interconnexion selon la revendication 19, dans laquelle la structure de grille (6) présente des moyens pour la fixer à l'élément de jonction (2) d'une forme prédéterminée, qui est circulaire, elliptique, en forme de fente ou de la forme d'une croix symétrique ou asymétrique.

21. Unité d'interconnexion selon l'une quelconque des revendications précédentes, dans laquelle les parois de fermeture (12) sont formées en une seule pièce avec la structure de grille (6) qui s'étend à travers la partie d'extrémité des bras susmentionnés (2a) de l'élément de jonction (2) et entoure de manière étanche les éléments de l'unité de connexion (3).

22. Unité d'interconnexion selon l'une quelconque des revendications précédentes, dans laquelle au moins une empreinte (2e) est formée dans le socle de l'élément de jonction (2), dans la partie de ce dernier entre ses bras (2a, 2b), de préférence de manière à être en saillie vers l'intérieur de la coupe en forme de canal dudit élément de jonction (2).

23. Unité d'interconnexion selon la revendication 22, dans laquelle au moins un trou (2f) est formé à travers ladite empreinte (2e) pour fixer de manière locale ladite structure de grille de renforcement (6).

24. Unité d'interconnexion selon l'une quelconque des revendications précédentes, dans laquelle ledit élément de jonction métallique (2) est composé d'un élément précoupé qui est sous la forme d'un moule dans lequel la structure de grille doit également être moulée par injection.
